(19) Europäisches Patentamt
European Patent Office
Office européen des brevets

(11) Publication number: **0 177 982**
**B1**

(12) # EUROPEAN PATENT SPECIFICATION

(45) Date of publication of patent specification: **11.05.88**

(51) Int. Cl.$^4$: **G 03 C 5/54**

(21) Application number: **85201044.6**

(22) Date of filing: **01.07.85**

(54) **Process for the production of diffusion transfer images with magenta dye-releasing non-diffusable compounds.**

(30) Priority: **13.08.84 EP 84201165**

(43) Date of publication of application:
**16.04.86 Bulletin 86/16**

(45) Publication of the grant of the patent:
**11.05.88 Bulletin 88/19**

(84) Designated Contracting States:
**BE DE FR GB**

(56) References cited:
**EP-A-0 038 092**
**US-A-3 878 190**

**RESEARCH DISCLOSURE, no. 134, June 1975, page 46, disclosure no. 13456, Havant, Hants., GB; W.H. FAUL: "4-Sulfonamidonaphthol colored couplers"**

(73) Proprietor: **AGFA-GEVAERT naamloze vennootschap**
**Septestraat 27**
**B-2510 Mortsel (BE)**

(72) Inventor: **Van de Sande, Christian Charles**
**Tuinlaan 95**
**B-9180 Belsele (BE)**
Inventor: **Verhecken, André**
**Eduard Arsenstraat 47**
**B-2510 Mortsel (BE)**
Inventor: **Van den Bergh, Armand Maria**
**Karmelietenstraat 99**
**B-2600 Berchem (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 177 982 B1

**Description**

The present invention relates to a process for the production of diffusion transfer images with magenta dye-releasing non-diffusible compounds.

Dye diffusion transfer imaging can be carried out in a number of ways but each system is based on the same principle, namely the alteration of the solubility of dyes controlled by the development of the photographic silver image.

In commonly known dye diffusion transfer processes the dye-image-producing compounds are (A) initially mobile in alkaline aqueous media and become immobilized during processing, or (B) they are initially immobile and are mobilized during processing.

A survey of such processes is given by Christian C. Van de Sande in Angew. Chem. Int. Ed. Engl. *22* (1983) 191—209.

Four important categories of dye-release processes are based on one of the following reactions:

(A) a redox-reaction controlling a solubility change;

(B) an oxidative chromogenic coupling reaction;

(C) a redox-controlled cleavage reaction;

(D) an argentolytic cleavage reaction of a dye releasing compound with silver ions.

A dye-developer system based on redox-controlled solubility change (ref. e.g. US—A—2 983 606) was the first commercially introduced dye diffusion transfer system.

Later on redox-controlled dye-releasing compounds were introduced in commercial systems.

Oxidizable dye-releasing compounds that after oxidation release a dye moiety by hydrolysis are known, e.g., from DE—A—2,242,762, DE—A—2,406,664, DE—A—2,505,246, DE—A—2,613,005, DE—A—2,645,656 (DE—A stands for Germany Auslegeschrift) and Research Disclosure publications Nos. 15,157 (November 1976), 16,654 (April 1977) and 17,736 (January 1979).

In these references dye-releasing compounds are described in which the dye moiety is linked most frequently to an oxidizable carrier moiety through a sulphonamido group. The dye released from such compounds contains a sulphamoyl group.

Oxidizable dye-releasing compounds which in oxidized form release a dye moiety by intramolecular displacement reaction are described, e.g., in US—A—3,443,940. The dye released from these compounds contains a sulphinate group.

It is particularly interesting in dye diffusion transfer to operate with dye-releasing compounds the dye release from which is inversely proportional to the development of a negative-working silver halide emulsion layer and whereby positive dye images can be formed in a receptor material.

Oxidizable dye-releasing compounds that in oxidized form are stable but in reduced state set free a dye moiety by an elimination reaction are described in DE—A—2,823,159 and DE—A—2,854,946. Compounds of that type when used in reduced form in an unexposed silver halide emulsion material are called IHO-compounds wherein IHO is the acronym for "inhibited hydrolysis by oxidation". When used in the oxidized form these compounds are called IHR-compounds, wherein IHR is the acronym for "increased hydrolysis by reduction".

Reducible quinonoid IHR-compounds which after reduction can undergo a dye release with an intramolecular nucleophilic displacement reaction are described in DE—A—2,809,716 wherein these compounds are called BEND-compounds, BEND standing for "Ballasted Electron-accepting Nucleophilic Displacement".

Reducible IHR-compounds which after reduction can undergo a dye release with an elimination reaction are described in published EP—A—0,004,399 and in US—A—4,371,604.

Other classes of compounds that may release a dye after reduction are described in DE—A—3,008,588 and DE—A—3,014,669.

Particularly useful are redox-controlled dye-releasing compounds according to the general formula:

BAL—REDOX-DYE

wherein:

BAL represents a moiety with ballast residue for immobilizing the dye-releasing compound in a hydrophilic colloid layer,

REDOX represents a redox-active group, i.e. a group that under the circumstances of alkaline silver halide development is oxidizable or reducible and depending on the oxidized or reduced state yields a dye release by an elimination reaction, nucleophilic displacement reaction, hydrolysis or cleavage reaction,

DYE represents a diffusible dye moiety or a precursor thereof.

Coloured compounds for use in a dye diffusion transfer process include e.g. triphenylmethane, xanthene, azo, azomethine, anthraquinone, alizarine, merocyanine, quinoline or cyanine dye structures. Of particularly frequent use is a mono-azo-dye group (ref. e.g. US—A—3,725,062).

In US—A—3,878,190 1,3,4-thiadiazolyl azo dyes are described as dyes for textile materials.

In Res. Discl. (1975) Nr. 134 (13456) a 4-sulphonamido-naphthol coloured coupler containing a 1,3,4-thiadiazolyl azo group is described for masking purposes in photographic colour elements.

In dye diffusion transfer imaging there is a need for compounds that can yield diffusible dyes having a

well-defined hue, good stability to heat, light and chemical reagents. In subtractive colour photography cyan, magenta and yellow dyes are used to form a multi-colour image in natural colours.

It is an object of the present invention to provide a process for the production of diffusion transfer images with non-diffusible dye releasing compounds that are capable of releasing a magenta azo dye with a particularly low unwanted side absorption and a very narrow bandwidth.

In accordance with the present invention a process for the production of diffusion transfer images comprises the steps of:

(1) applying an alkaline aqueous processing composition to an imagewise exposed photographic material that contains in operative association with at least one alkali-permeable silver halide hydrophilic colloid emulsion layer a dye releasing compound that can split off a diffusible magenta azo-dye.

(2) providing a silver halide developing agent in said photographic material for being present therein during application of said alkaline liquid to effect imagewise release of said dye as a function of development of said silver halide emulsion layer and a redox-reaction not being an oxidative chromogenic coupling reaction or as a function of said development and an argentolytic reaction, and

(3) allowing diffusion of said dye into an image-receiving layer which is in water-permeable relationship with said emulsion layer, characterized in that the said dye releasing compound corresponds to the following general formula:

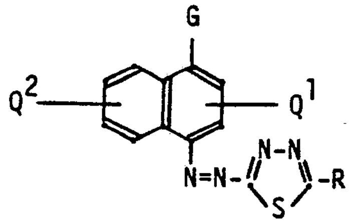

wherein:

G is hydroxyl or salt or alkali labile precursor thereof, or $H_2N$— or $R^1SO_2NH$—, of which $R^1$ is an alkyl group including a substituted alkyl group or an aryl group including a substituted aryl group;

$Q^1$ being in position 2 or 3 relative to G is hydrogen, halogen, —$SO_2NR^2R^3$, —$SO_2R^4$, —$SO_3H$, —$CONR^2R^3$ or —$COOR^4$, or which $R^2$ and $R^3$ (same or different) is hydrogen, an alkyl group including a substituted alkyl group (e.g. aralkyl), an aryl group including a substituted aryl group, e.g. an aryl group substituted with an alkoxy group, a (di)alkylamino group or ring closed amino group such as morpholinyl, a cycloalkyl group, a heterocyclic ring substituent including a substituted heterocyclic ring substituent, or $R^2$ and $R^3$ represent together the necessary atoms to complete a heterocyclic ring; and $R^4$ is hydrogen, an alkyl group including a substituted alkyl group (e.g. an aralkyl group), an aryl group including a substituted aryl group, a cycloalkyl group or a heterocyclic ring substituent including a substituted heterocyclic ring substituent;

$Q^2$ being in position 5, 6, 7 or 8 relative to G is hydrogen, halogen, $R^4O$—, HO— or salt or alkali labile precursor thereof, —$NR^2R^3$, —$SO_2R^4$, —$SO_3H$, —$COOR^4$, —$SO_2NR^2R^3$, —$CONR^2R^3$, —$NR^4SO_2R^5$, or —$NR^4COR^5$, of which $R^5$ is $R^4$ or —$NR^2R^3$ or —$OR^4$ wherein $R^2$, $R^3$ and $R^4$ have the same meaning as defined above, and

R is hydrogen, an alkyl group including a substituted alkyl group, an aryl group including a substituted aryl group, a cycloalkyl group, —$OR^4$, —$SR^4$, —$NR^2R^3$, —$NR^4SO_2R^5$ or —$NR^4COR^5$ wherein $R^2$, $R^3$, $R^4$ and $R^5$ have the same meaning as defined above, and wherein one of the groups R, $Q^1$ or $Q^2$ is

$$CAR—G^1—$$

wherein:

CAR is a moiety, being or carrying a ballasting group, e.g. a hydroquinone or quinone type moiety, that is separatable from the diffusible dye rest of the molecule by splitting off from $G^1$ or by cleavage of $G^1$ as a result of the said redox reaction, or as the result of the said argentolytic reaction,

$G^1$ is a possibly ballasted linking group of the type

$$—(A_1)_q—(B)_r—(A_2)_s—$$

wherein:

each of q, r and s is 1 or zero with the proviso that not more than two thereof is zero;

Each of $A_1$ and $A_2$ (same or different) is a single bond or a bivalent atom (e.g. —O—, —S—) or a bivalent atom group, e.g. —$SO_2$—, —CO—, —$CONR^4$—, —$SO_2NR^4$—, —$NR^4CO$—, —$NR^4SO_2$—, —$NR^4COO$-phenylene or —$NR^4$, wherein $R^4$ has the same meaning as described above; and

B is a single bond, an alkylene group including a substituted alkylene group or an arylene group including a substituted arylene group.

(CAR—$G^1$—) moieties whereform in oxidized form by a non-chromogenic reaction in alkaline medium

a dye moiety can be split off are selected e.g. from the following groups including these groups in further substituted form:

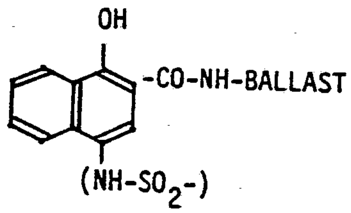
,
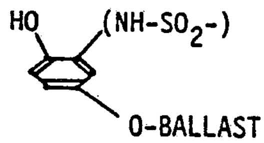
,
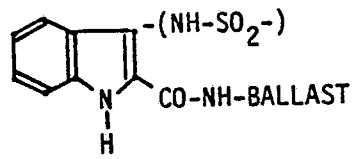
,

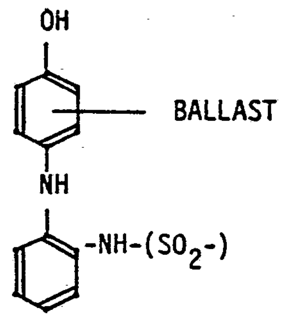
,
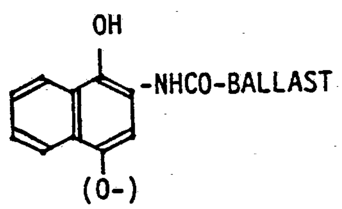

The groups within brackets are released together with the dye moiety (not represented), and remain as diffusion promoting groups with the dye moiety.

In the above mentioned dye-releasing compounds the dye release proceeds directly proportional to the rate of formation of the oxidation products of developing agent used in the development of silver halide. Said compounds are therefore negative working in that they undergo dye release in correspondence with the exposed portions of a negative working silver halide emulsion layer. For production of a negative working silver halide emulsion layer. For the production of positive pictures an image eversal is needed which may be based on the use of positive-working layers containing a direct-positive silver halide emulsion or on the silver salt complex diffusion transfer process by selecting a proper layer assemblage as described, e.g., in EP—A—0,003,376.

(CAR—G[1]—) moieties wherefrom in alkaline medium a dye moiety can be set free after reduction are selected from the following groups including these groups in further substituted form:

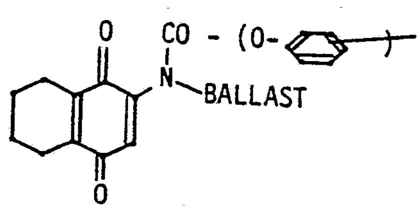
,
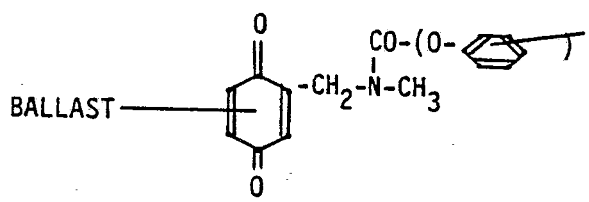
,

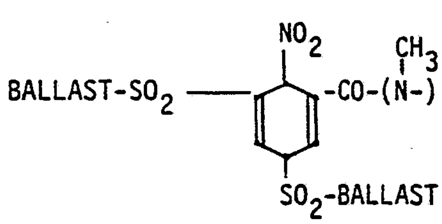
,
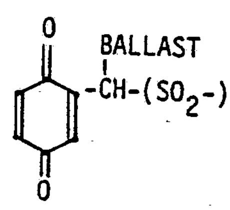
,
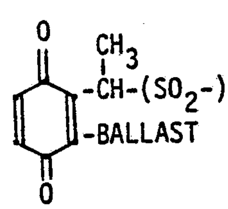
,

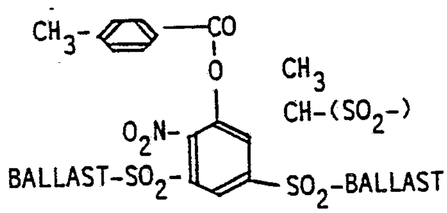
,
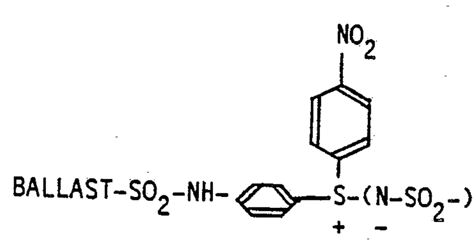

The groups within brackets are functional groups that are split off together with the dye moiety (not shown). These functional groups can be separated from the chromophoric group of the dye by a linking member having no influence on the absorption properties of the dye. The functional group, however, optionally together with said linking member, may be of importance to determine the diffusion-mobility and/or capability of the released dye to be mordanted. Useful linking members are, e.g., alkylene and arylene groups.

Examples of carriers that are capable of releasing a diffusible dye or precursor thereof by argentolysis are described e.g. in the already mentioned Angew. Chem. Int. Ed. Engl. *22* (1983), p. 207. Particularly useful examples thereof are the following:

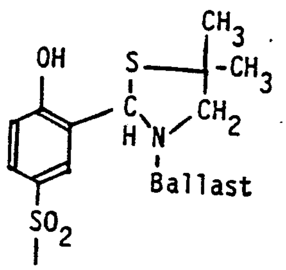
,
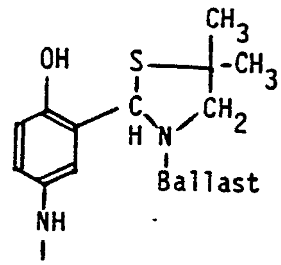

Ballast residues (BALLAST) that confer diffusion resistance are residues which allow the compounds according to the invention to be incorporated in a non-diffusing form in the hydrophilic colloids normally used in photographic materials. Organic residues, which generally carry straight- or branched-chain aliphatic groups and also isocyclic or heterocyclic or aromatic groups mostly having from 8 to 20 carbon atoms are preferred for this purpose. These residues are attached to the remainder of the molecule either directly or indirectly, e.g. through one of the following groups: —NHCO—; —$NHSO_2$; —NR—, in which R represents hydrogen or alkyl; —O—; —S—: or —$SO_2$—. The residue which confers diffusion resistance may in addition carry groups which confer solubility in water, e.g. sulpho groups or carboxyl groups, and these may also be present in anionic form. Since the diffusion properties depend on the molecular size of the compound as a whole, it is sufficient in some cases, e.g., if the entire molecule is large enough, to use one or more shorter-chain groups as groups conferring resistance to diffusion.

In a preferred embodiment for positive dye image production with negative working silver halide emulsions the above groups D form part of the already mentioned dye releasing quinonoid IHR-compounds wherefrom a diffusible dye moiety is released by reduction and hydrolysis.

The reaction operative in the release of a dye moiety from said quinonoid IHR-compounds proceeds in two stages (A) and (B) illustrated by the following equations:

(I)
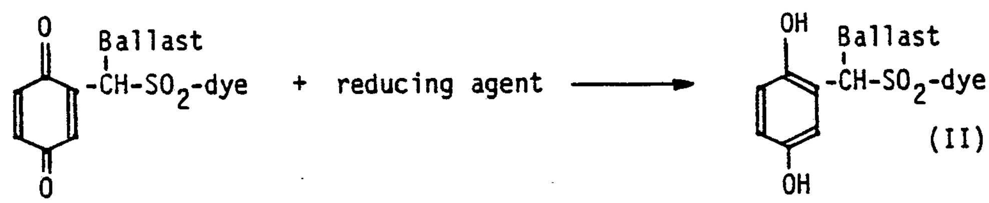

(II)

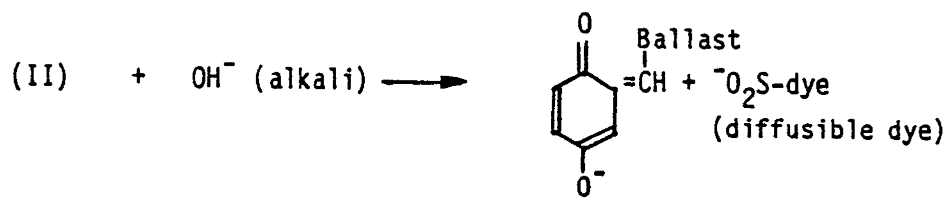


wherein:

"Ballast" stands for a ballasting group making the compound non-diffusing in a hydrophilic colloid medium under wet alkaline conditions.

The terminology "diffusible" in this invention denotes materials having the property of diffusing effectively through the colloid layers of the photographic elements in alkaline liquid medium. "Mobile" has the same meaning. The term "non-diffusible" has the converse meaning.

Examples of magenta dye providing compounds for use in the process according to the present invention are listed in the following Table 1.

Table 1

1 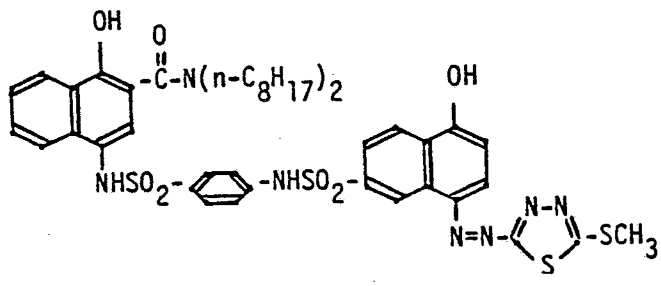

2 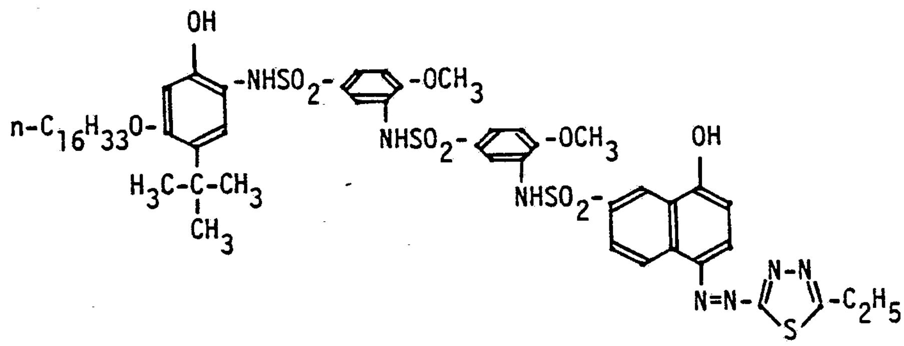

3 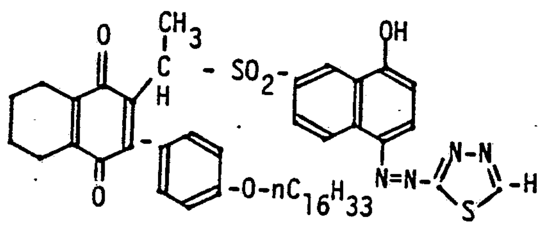

4 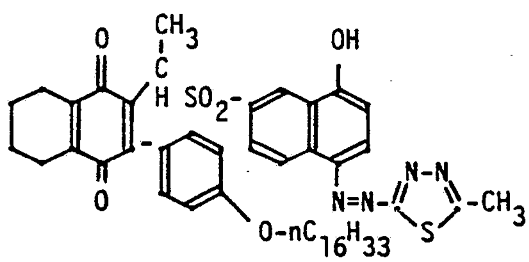

5 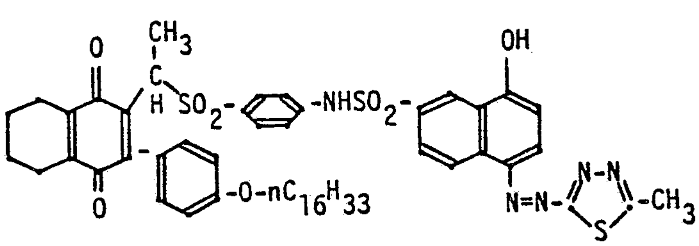

TABLE 1 (continued)

6

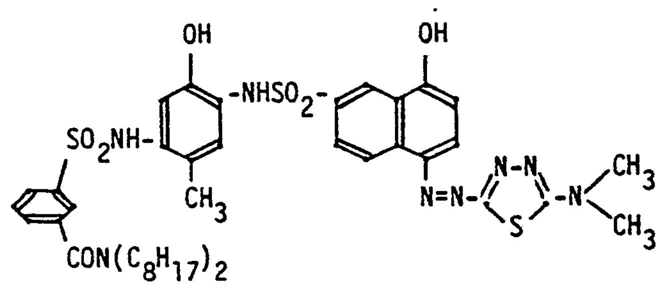

7

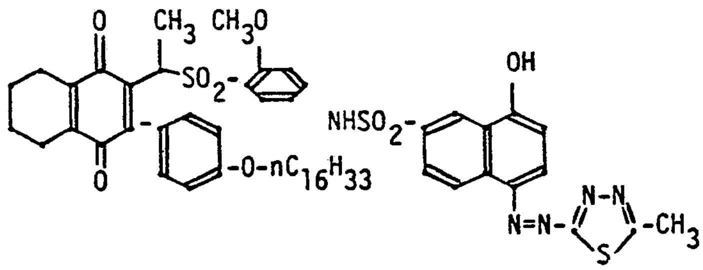

8

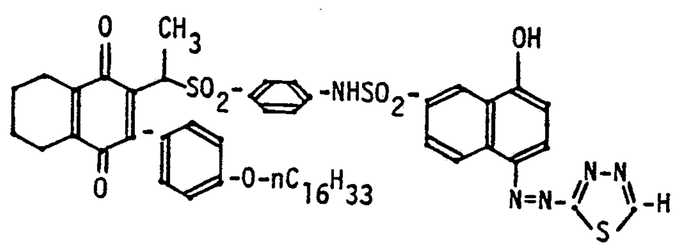

9

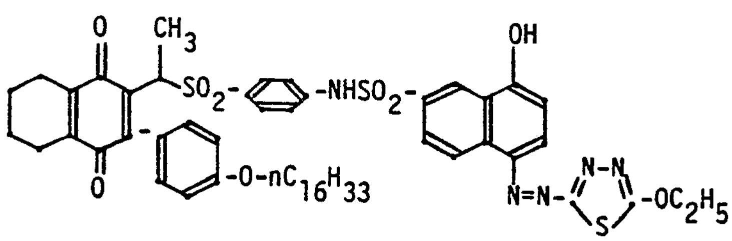

10

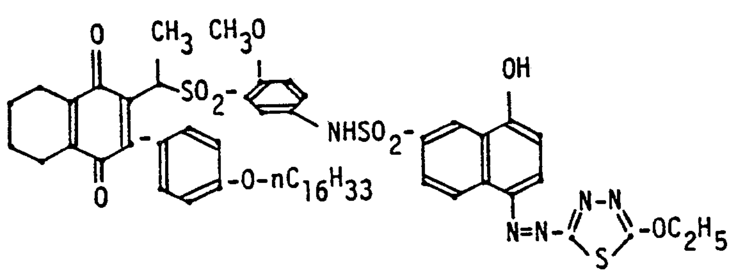

TABLE 1 (continued)

11 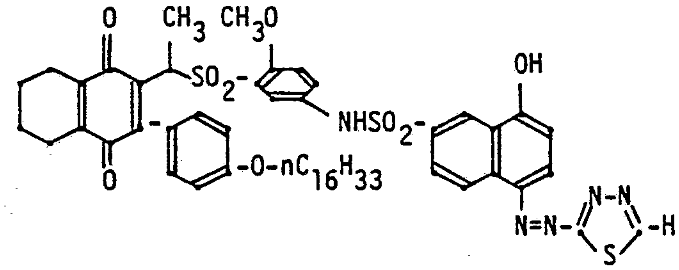

12 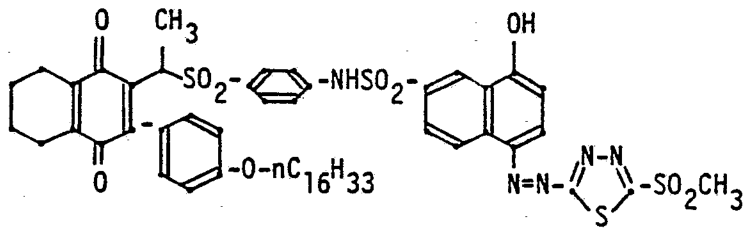

13 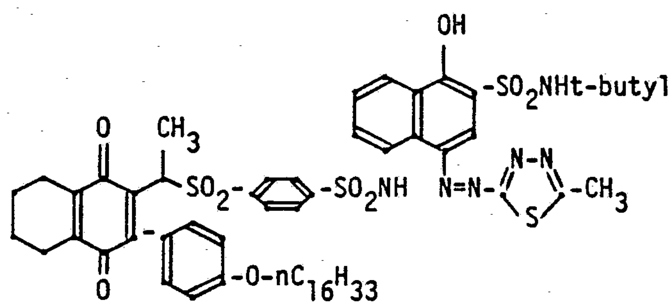

14 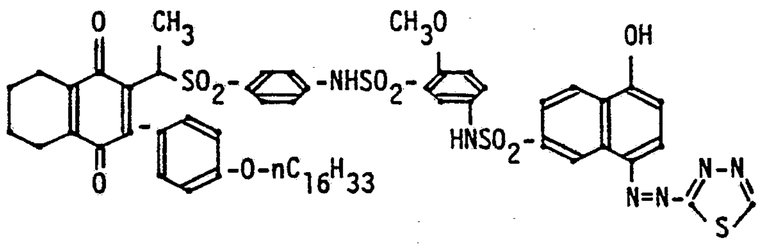

15 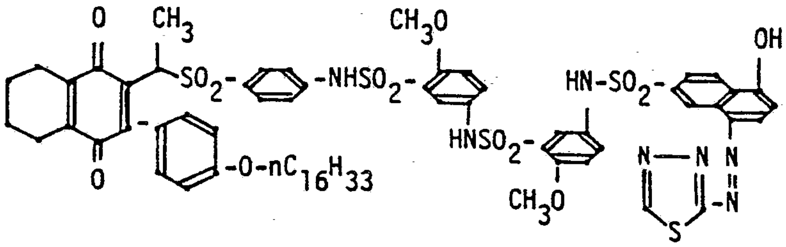

TABLE 1 (continued)

16 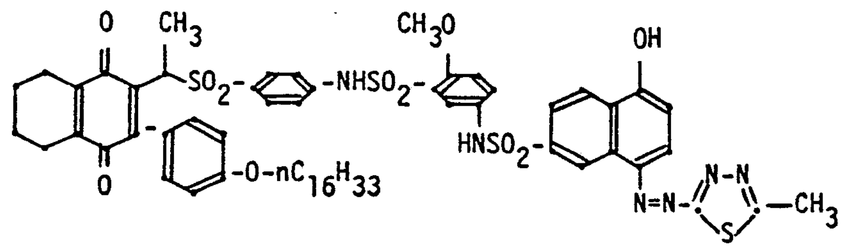

17 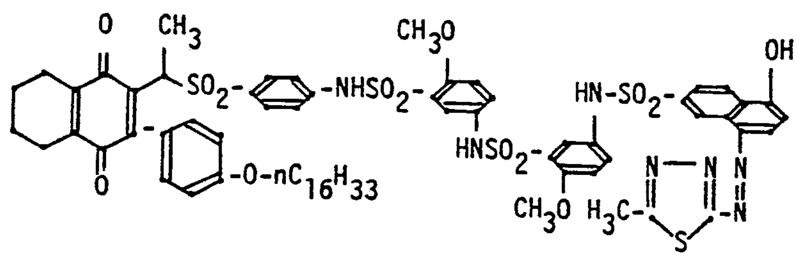

18 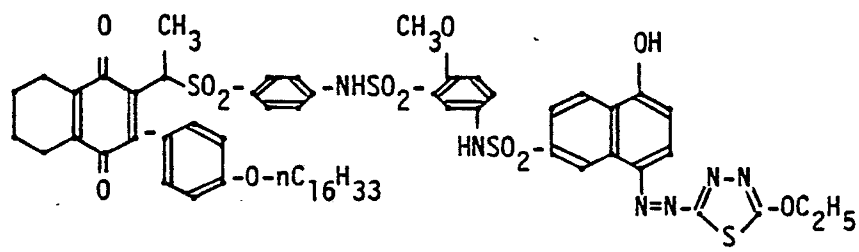

19 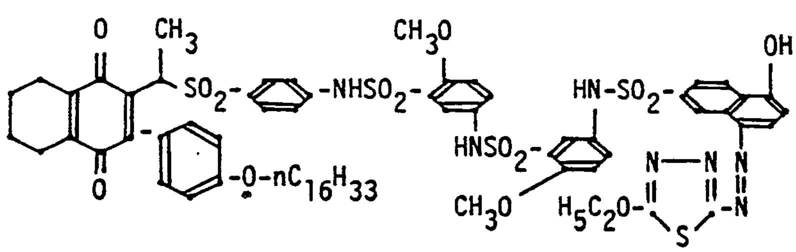

20 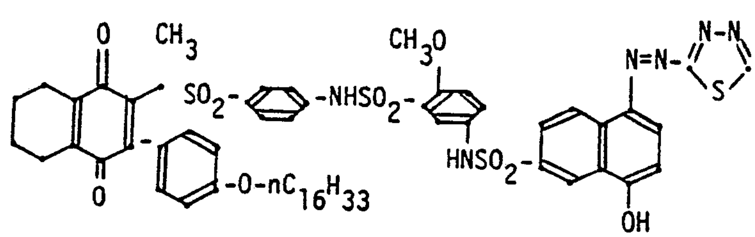

TABLE 1 (continued)

21

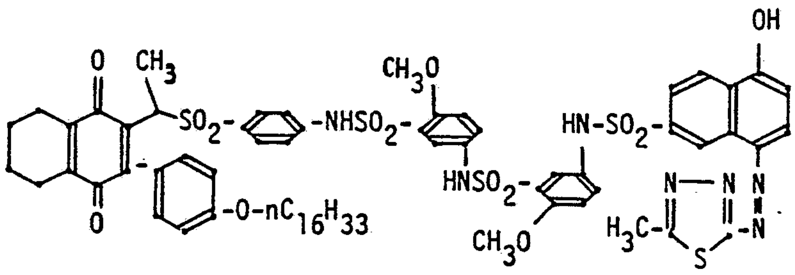

22

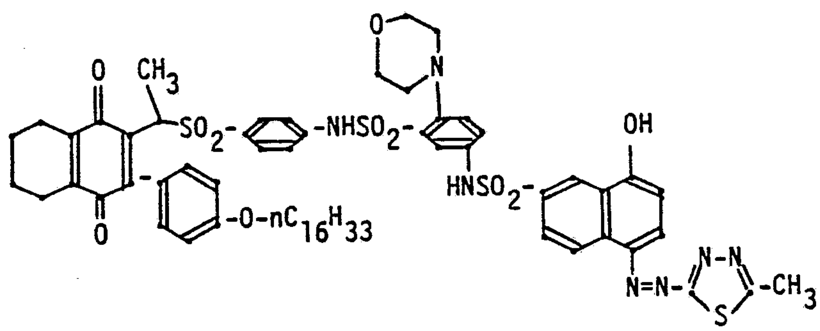

23

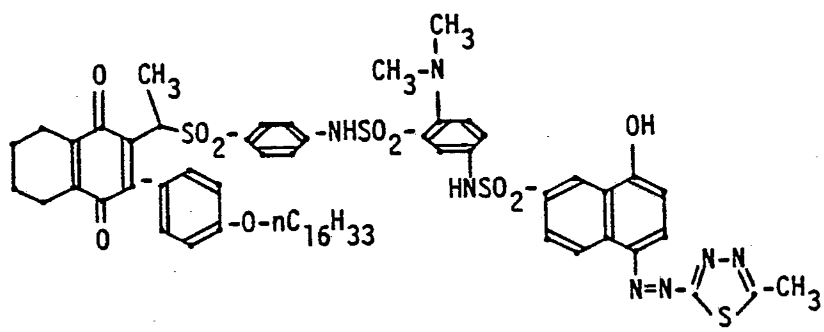

24

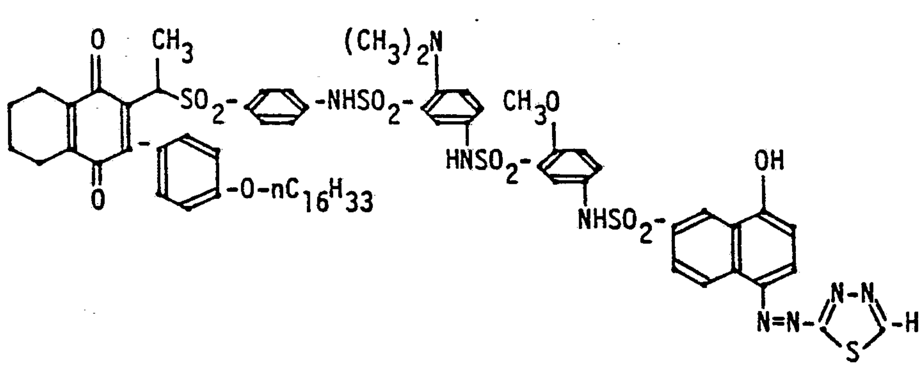

Examples of diffusible dyes that can be released from non-diffusible compounds for use in the process according to the present invention are given in Table 2 hereinafter. The dyes (D1—D13) were prepared by azo coupling of the appropriate diazotized 2-amino-1,3,4-thiadiazole with the appropriate coupling component (azo coupler) according to the reaction scheme:

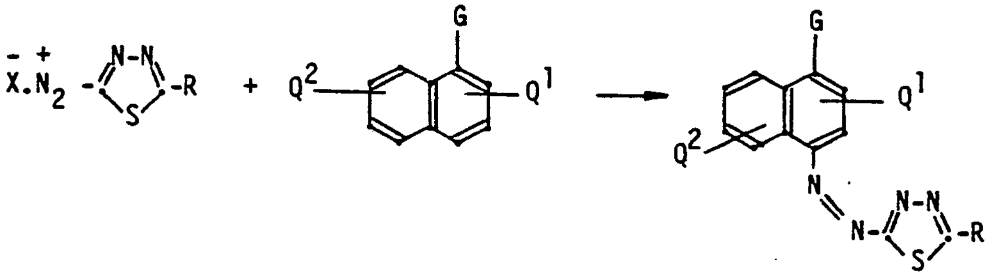

2-Amino-1,3,4-thiadiazoles can be prepared according to procedures described in e.g. GB—A—916,061; GB—A—851,564; R. Clarkson and J. K. Landquist, J. Chem. Soc. (C) 1967, pp, 2700—2704; and E. Hoggarth, J. Chem. Soc., 1949, p. 1164.

The obtained dyes were isolated (mg amounts) by thin-layer-chromatography, dissolved in alkaline water and were mordanted on a piece of receiving sheet as described hereinafter, so as to have a density in the range 0.8—1.2. The thus obtained coloured material was then submitted to spectral measurements with a spectrophotometer and colour densitometer defining the wavelength of maximum absorption ($\lambda_{max}$) and the B 1/2-values.

The B 1/2 values are by definition the bandwidth values, expressed in nm at half the maximum density of the absorption curve.

The results of these spectral measurements are mentioned in the following Table 2.

TABLE 2

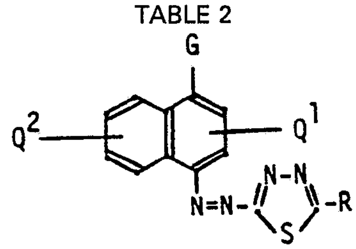

| No. | G | $Q_1$ | $Q_2$ | R | $\lambda_{max}$ (nm) | B 1/2 (nm) | filter values B : G : R |
|---|---|---|---|---|---|---|---|
| D1 | OH | H | 7—$SO_3H$ | H | 550 | 100 | 32:148:13 |
| D2 | OH | H | 6—$SO_3H$ | H | 546 | 107 | 34:148:15 |
| D3 | OH | H | 8—$SO_3H$ | H | 552 | 92 | 34:148:15 |
| D4 | OH | 2—$SO_3H$ | H | H | 562 | 102 | 36:148:15 |
| D5 | OH | 3—$SO_3H$ | H | H | 532 | 97 | 50:148:13 |
| D6 | OH | H | 7—$SO_3H$ | $C_2H_5O$— | 550 | 100 | 30:148:15 |
| D7 | OH | H | 7—$SO_3H$ | $CH_3$— | 552 | 101 | 34:148:14 |
| D8 | OH | H | 7—$SO_3H$ | $CH_3S$— | 568 | 103 | 28:148:35 |
| D9 | OH | H | 7—$SAO_3Z$ | $CH_3$ | 555 | 104 | 35:148:15 |
| D10 | OH | H | 7—$SAO_3Z'$ | H | 554 | 101 | 34:148:14 |
| D11 | OH | H | 7—$SAO_3Z'$ | $C_2H_5O$— | 551 | 106 | 32:148:15 |
| D12 | OH | H | 7—$SAO_3Z'$ | $C_2H_5O$— | 550 | 106 | 33:148:16 |
| D13 | OH | H | 7—$SAO_3Z'$ | $CH_3$ | 556 | 101 | 34:148:14 |
| $R_1$ | | — | — | — | 536 | 119 | 52:148:14 |
| $R_2$ | | — | — | — | 534 | 148 | 60:148:25 |

Z :

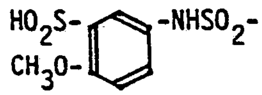

Z' :

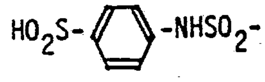

$R^1$ and $R^2$ are dyes splitted off from IHR-dye releasing compounds $PR^1$ and $PR^2$ having the following structure respectively:

PR1

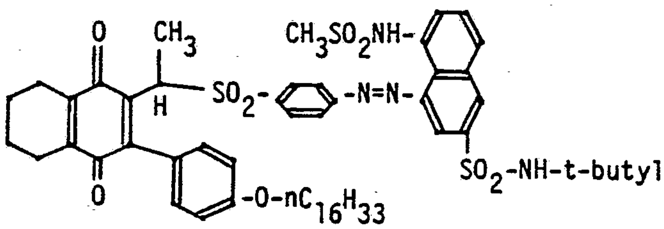

PR2

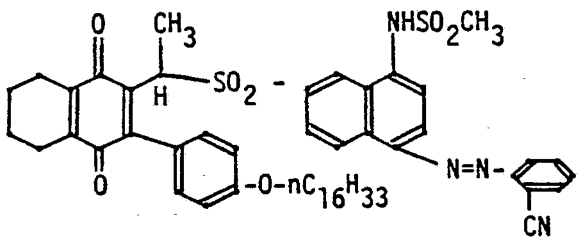

The dyes released from the compounds used according to the present invention are characterized by narrower absorption bands (as exemplified by the bandwidth at half height, B 1/2) and also by lower side absorptions in the blue region of the visible spectrum (see the filter values, wherein B=blue, G=green and R=red filter value).

*Composition of the receiving sheet*

A reflective polyethylene coated paper base (paper sheet of 100 g/sq.m coated at both sides with a polyethylene stratum of 15 g/sq.m) was corona-discharge-treated and coated with the following composition applied per sq.m:

| | |
|---|---|
| a polymeric mordanting agent obtained from 4,4'-diphenylmethane diisocyanate and N-ethyl-diethanolamine being quaternized with epichlorohydrin according to Example 1 of US—A—4,186,041 | 2.08 g |
| gelatin | 5.2 g |

The compound PR1 was prepared acording to the following reaction scheme:

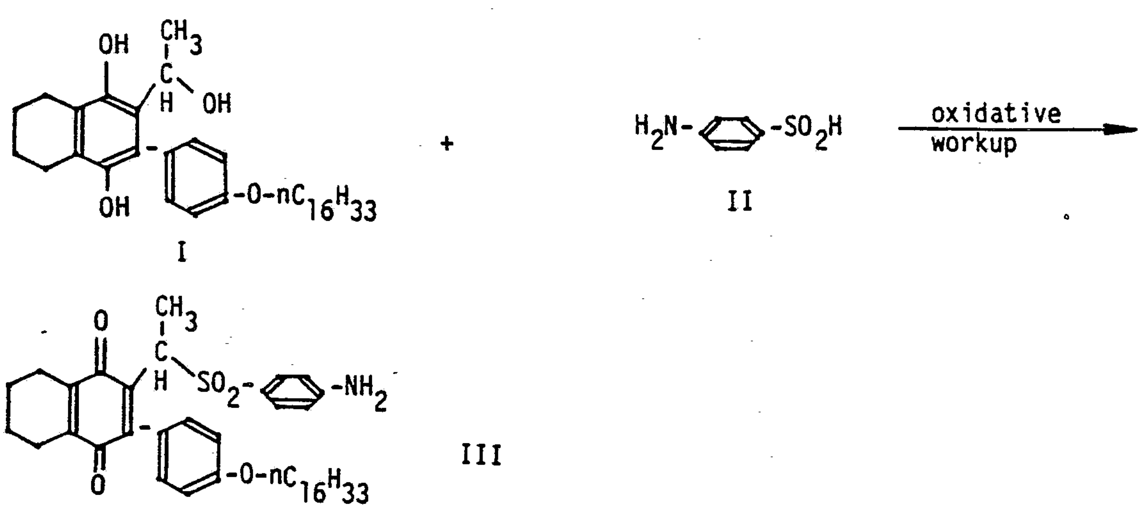


I + II → III

III 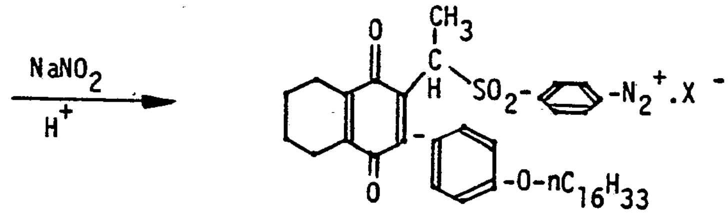


IV

IV + 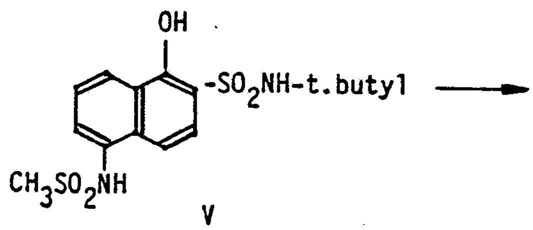 PR1

V

The preparation of compound I is described in published EP—A—0 109 701.

The preparation of compound III is described in published EP—A—0 149 260.

The preparation of compound V is described in US—A—3,954,476.

The preparation of PR 2 is described in published EP—A—0 109 701.

The detailed synthesis of compound 7 in Table 1 is given hereinafter by way of example. The preparation of the other compounds in Table 1 proceeds analogously and causes no difficulties to one skilled in the art of the organic synthesis.

*Reaction scheme:*

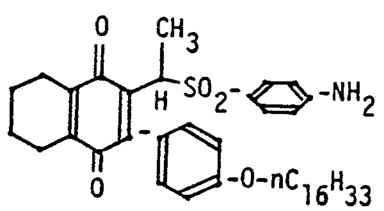

III

+

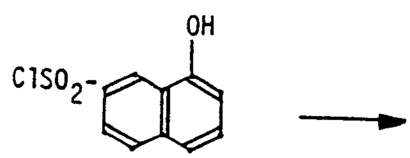

VI

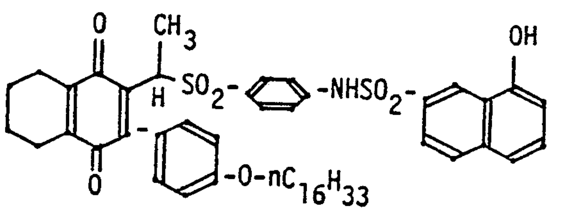

VII

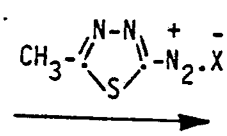

compound 7

*Preparation of compound VI*

56 g (0.25 mol) of naphthalene sulphonic acid were stirred in 750 ml of dichloroethane. Thereto were added subsequently 25 ml of N-methylpyrrolidone and 75 ml of phosphorus oxychloride. The reaction mixture was heated to 80°C and at said temperature was stirred for 1 h while boiling with reflux. After cooling it was poured in to 1.5 kg of crushed ice and stirred for 30 min whereupon the organic phase was separated and the aqueous phase extracted with 250 ml of methylene chloride. The combined organic liquids were treated with water, dried with anhydrous sodium sulphate and the solvents removed by evaporation under diminished pressure. Yield: 52 g of the sulphonyl chloride compound VI.

*Preparation of compound VII*

33 g (1/20 mol) of compound III (prepared as described in published EP—A—0 149 260) were dissolved in 300 ml of methylene chloride whereto 10 ml of anhydrous pyridine were added. The solution was heated to boiling with reflux whereupon 12 g of compound VI dissolved in 33 ml of methylene chloride were added dropwise. After a reaction period of 1 h an additional amount of 2.4 g of compound VI were added and such

was repeated one more time after a further 1 h. Finally the reaction mixture was concentrated by rotary evaporator and the residue was dissolved in 400 ml of methylene chloride. The solution was filtered over colloidal silica and the filter mass was washed with methylene chloride. The solvent was removed by evaporation. Yield: 35 g (brown product).

*Preparation of compound 5*

1.2 g of 2-amino-5-methyl-1,3,4-thiadiazole were added to a mixture of 10 ml of acetic acid and 2 ml of propionic acid whereto at 5°C. 1.7 ml of nitrosyl sulphuric acid (40% by weight in $H_2SO_4$) were added. After the addition the reaction mixture was stirred for 1 h. The obtained diazonium salt soluton was added at 5°C in small portions to 8.7 g of compound VII dissolved in a mixture of 100 l of ethanol and 25 ml of ethyl acetate. The reaction mixture kept at 5°C was stirred for 2 h and thereupon 4 h at 20°C. Thereupon the reaction mixture was poured into water and extracted therefrom with methylene chloride. The organic phase was dried and concentrated by evaporation of the solvent. Yield: 7.2 g. Purification proceeded by preparative column chromatography using a mixture of methylene chloride and methanol (95/5 by volume) as eluent. Yield of purified compound VII: 3.1 g.

For monochrome dye image production a photographic silver halide emulsion material for use according to the present invention comprises a support carrying at least one alkali-permeable silver halide hydrophilic colloid emulson layer having in operative association therewith one of said compounds.

BY "operative association" is understood that the release of the diffusible dye moiety from the compound can proceed in accordance with the development of the silver halide emulsion layer. Therefore, the dye-releasing compound has not necessarily to be present in the silver halide emulsion layer but may be contained in another layer being in water-permeable relationship therewith.

According to a preferred embodiment the photographic material contains silver halide emulsion layer(s) of the negative working type, i.e. of the type yielding on development a silver imaghe in the photoexposed area.

In an embodiment for producing multicolour images this invention relates to a photographic process wherein the photographic material comprises a support carrying (1) a red-sensitive silver halide emulsion layer having operatively associated therewith a said dye-releasing compound that is initially immobile in an alkali-permeable colloid medium and wherefrom through the reducing action of a silver halide developing agent and alkalinity a cyan dye is split off in diffusible state, (2) a green-sensitive silver halide emulsion layer having operatively associated therewith a said compound of (1) with the difference that a magenta dye is split off in diffusible state, and (3) a blue-sensitive silver halide emulsion layer having operatively associated therewith a said compound of (1) with the difference that a yellow dye is split off in diffusible state. In the present colour-providing compounds the dye group(s) may be associated with substituents that form a shifted dye.

Shifted dyes as mentioned, e.g., in US—A—3,260,597 include those compounds wherein the light-absorption characteristics are shifted hypsochromically or bathochromically when subjected to a different environment such as a change of the $pK_a$ of the compound, or removal of a group such as a hydrolyzable acyl group linked to an atom of the chromophoric system and affecting the chromophore resonance structure. The shifted dyes can be incorporated directly in a silver halide emulsion layer or even on the exposure side thereof without substantial absorption of light used in recording. After exposure, the dye is shifted to the appropriate colour, e.g. by hydrolytic removal of said acyl group.

When using IHR-quinonoid compounds it is preferred to carry out the colour diffusion transfer process in conjunction with a mixture of reducing agents at least two of which being a compound called electron donor (ED-compound) and a compound called electron-transfer agent (ETA-compound) respectively.

The ED-compounds are preferably non-diffusing, e.g. are provided with a ballasting group, so that they remain within the layer unit wherein they have to transfer their electrons to the quinonoid compound.

The ED-compound is preferably present in non-diffusible state in each silver halide emulsion layer containing a different non-diffusible IHR-quinonoid compound. Examples of such ED-compounds are ascorbyl palmitate and 2,5-bis(1',1',3',3'-tetramethylbutyl)-hydroquinone. Other ED-compounds are disclosed in US—A—4,139,379 and in published DE—A—2,947,425. Instead of an ED-compound an electron-donor precursor (EDP) compound can be used in the photographic material as described e.g. in published DE—A—2,809,716 and in US—A—4,278,750. Particularly useful ED-precursor compounds for combination with the present IHR-quinonoid compounds are disclosed in EP—A—83.200.353.7 and in published DE—A—3,006,268 according to the following general formula:

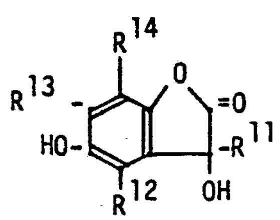

wherein:

$R^{11}$ represents a carbocyclic or heterocyclic aromatic ring, each of $R^{12}$, $R^{13}$ and $R^{14}$ (same or different) represents hydrogen, alkyl, alkenyl, aryl, alkoxy, alkylthio, amino, or

$R^{13}$ and $R^{14}$ together represent an adjacent ring, e.g. carbocyclic ring, at least one of $R^{11}$, $R^{12}$, $R^{13}$ and $R^{14}$ representing a ballast group having from 10 to 22 carbon atoms.

The ETA-compound is preferably used as developing agent in diffusible state and is, e.g., incorporated in mobile for in (1) hydrophilic colloid layer(s) adjacent to one or more silver halide emulsion layers or applied from the processing liquid for the dye diffusion transfer.

Typically useful ETA-compounds include hydroquinone compounds, aminophenol compounds, catechol compounds, phenylenediamines and 3-pyrazolidinone compounds e.g. 1-aryl.-3-pyrazolidinone as defined, e.g., in US—A—4,139,379.

A combination of different ETA's such as those disclosed in US—A—3,039,869 can be employed likewise. Such developing agents can be used in the liquid processing composition or may be contained, at least in part, in any layer or layers of the photographic element or film unit such as the silver halide emulsion layers, the dye image-providing material layers, interlayers, image-receiving layer, etc. The particular ETA selected will, of course, depend on the particular electron donor and quinonoid compound used in the process and the processing conditions for the particular photographic element.

The concentration of ED-compound or ED-precursor compound in the photographic material may vary within a broad range but is, e.g., in the molar range of 1:1 to 8:1 with respect to the quinonoid compound. The ETA-comound may be present in the alkaline aqueous liquid used in the development step, but is used preferably in diffusible form in a non-sensitive hydrophilic colloid layer adjacent to at least one silver halide emulsion layer.

Migration of non-oxidized developing agent, e.g. acting as ETA-compound, proceeds non-image-wise and has an adverse effect on correct colour rendering when surplus developing agent remains unoxidized in the photoexposed areas of a negative-working emulsion layer. Therefore, according to a preferred embodiment of the present invention a silver halide solvent, eg. thiosulphate, is used to mobilize unexposed silver halide in complexed form for helping to neutralize (i.e. oxidize by physical development) migrated developing agent in the photoexposed areas wherein unaffected developing agent (ETA-compound) should no longer be available for reacting with the quinonoid compound directly or through the applied ED-compound. The use of silver halide solvents for that purpose has been described in the published EP—A—0049002.

In order to obtain a better colour rendition it is also advantageous to intercept oxidized ETA-compound and to prevent it from migrating to adjacent imaging layers where it could cause the undesired oxidation of ED-compound. For said interception so-called scavengers are used that are incorporated in the photographic material in non-diffusible state, e.g. in interlayers between the imaging layers. Suitable scavengers for that purpose are described, e.g., in US—A—4,205,987 and published EP—A—0,029,546.

The present dye releasing compounds and optionally ED or EDP-compounds can be incorporated in the photographic material by addition to the coating liquid(s) of its layer(s) by the usual methods known, e.g., for the incorporation of colour couplers in photographic silver halide emulsion materials.

The amount of dye-releasing compound coated per sq.m may vary within wide limited and depends on the maximum colour density desired.

The support for the photographic elements used according to the present invention may be any material as long as it does not deleteriously affect the photographic properties of the film unit and is dimensionally stable. Typical flexible sheet materials are paper supports, e.g. coated at one or both sides with an α-olefin polymer, e.g. polyethylene; they include cellulose nitrate film, cellulose actate film, poly(vinyl acetal) film, polystyrene film, poly(ethylene terephthalate) film, polycarbonate film, poly-α-olefins such as polyethylene and polypropylene film, and related films or resinous materials. The support is usually about 0.05 to 0.15 mm thick.

The image-receiving layer can form part of a separate image-receiving material or form an integral combination with the light-sensitive layer(s) of the photographic material.

Where the image-receiving layer after processing of the photosensitive material remains associated with the silver halide emulsion layer(s) normally an alkali-permeable light-shielding layer, e.g. containing white pigment particles is applied between the image-receiving layer and the silver halide emulsion layer(s).

For use in dye diffusion transfer photography any material may be employed as the image-receiving layer as long as the desired function of mordanting or otherwise fixing the diffused dye will be obtained. The particular material chosen will, of course, depend upon the dye to be mordanted. If acid dyes are to be mordanted, the image-receiving layer may be composed of or contain basic polymeric mordants such as polymers of amino-guanidine derivatives of vinyl methyl ketone such as described in US—A—2,882,156 of Louis M. Minsk, issued April 14, 1959, and basic polymeric mordants and derivatives, e.g. poly-4-vinylpyridine, the metho-p-toluene sulphonate of 2-vinylpyridine and similar compounds described in US—A—2,484,430 of Robert H. Sprague and Leslie G. Brooker, issued October 11, 1949, and the compounds described in the published DE—A—2,200,063 filed January 11, 1971 by Agfa-Gevaert A.G. Suitable mordanting binders include, e.g., guanylhydrazone derivatives of acyl styrene polymers, as described, e.g., in published DE—A—2,009,498 filed February 29, 1970 by Agfa-Gevaert A.G. In general,

however, other binders, e.g. gelatin, would be added to the last-mentioned mordanting binders. Effective mordanting compositions are long-chain quanternary ammnonium or phosphonium compounds or ternary sulphonium compounds, e.g. those described in US—A—3,271,147 of Walter Bush and 3,271,148 of Keith E. Whitmore, both issued September 6, 1966, and cetyltrimethyl-ammonium bromide. Certain metal salts and their hydroxides that form sparingly soluble compounds with the acid dyes may be used too. The dye mordants are dispersed in one of the usual hydrophilic binders in the image-receiving layer, e.g., gelatin, polyvinylpyrrolidone or partly or completely hydrolysed cellulose esters.

Generally, good results are obtained when the image-receiving layer, which is preferably permeable to alkaline solution, is transparent and about 4 to about 10 µm thick. This thickness, of course, can be modified depending upon the result desired. The image-receiving layer may also contain ultraviolet-absorbing materials to protect the mordanted dye images from fading, brightening agents such as the stilbenes, coumarins, triazines, oxazoles, dye stabilizers such as the chromanols, alkyl-phenols, etc.

Use of pH-lowering material in the dye-image-receiving element will usually increase the stability of the transferred image. Generally, the pH-lowering material will effect a reduction of the pH of the image layer from about 13 or 14 to as least 11 and preferably 5 to 7 within a short time after imbition. E.g., polymeric acids as disclosed in US—A—3,362,819 of Edwin H. Land, issued January 9, 1968, or solid acids or metal salts, e.g. zinc acetate, zinc sulphate, magnesium acetate, etc., as disclosed in US—A—2,584,030 of Edwin H. Land, issued January 29, 1952, may be employed with good results. Such pH-lowering materials reduce the pH of the film unit after development to terminate development and substantially reduce further dye transfer and thus stabilize the dye image.

An inert timing or spacer layer may be employed over the pH-lowering layer, which "times" or controls the pH reduction depending on the rate at which alkali diffuses through the inert spacer layer. Examples of such timing layers include gelatin, polyvinyl alcohol or any of the colloids disclosed in US—A—3,455,686 of Leonard C. Farney, Howard G. Rogers and Richard W. Young, issued July 15, 1969. The timing layer may be effective in evening out the various reaction rates over a wide range of temperatures, e.g., premature pH reduction is prevented when imbibition is effected at temperatures above room temperature, e.g. at 35° to 37°C. The timing layer is usually about 2.5 µm to about 18 µm thick. Especially good results are obtained if the timing layer comprises a hydrolysable polymer or a mixture of such polymers that are slowly hydrolysed by the processing composition. Examples of such hydrolysable polymers include polyvinyl acetate, polyamides, cellulose esters, etc.

An alkaline processing composition employed in the production of dye images according to the present invention may be a conventional aqueous solution of an alkaline material, e.g. sodium hydroxide, sodium carbonate or an amine such as diethylamine, preferably possessing a pH beyond 11.

According to one embodiment the alkaline processing liquid contains the diffusible developing agent that effects the reduction of the silver halide, e.g. ascorbic acid or a 3-pyrazolidinone developing agent such as 1-phenyl-4-methyl-3-pyrazolidinone.

The alkaline processing composition employed in this invention may also contain a desensitizing agent such as methylene blue, nitro-substituted heterocyclic compounds, 4,4'-bipyridinium salts, etc., to insure that the photosensitive element is not further exposed after its removal from the camera for processing.

For in-camera-processing, the solution also preferably contains a viscosity-increasing compound such as a high-molecular-weight polymer, e.g. a water-soluble ether inert to alkaline solutions such as hydroxyethylcellulose or alkali metal salts of carboxymethylcellulose such as sodium carboxymethylcellulose. A concentration of viscosity-increasing compound of about 1 to about 5% by weight of the processing composition is preferred. It imparts thereto a viscosity of about 100 mPa.s to about 200,000 mPa.s.

Although the common purpose in the known dye-diffusion transfer systems is the production of dye images in a receiving layer or sheet whereby the released dye(s) are eliminated from the photosensitive element by diffusion transfer, a residual image of dye may be likewise of practical interest forming a so-called "retained image". The latter terminology is used, e.g., in Research Disclosure (No. 17362) of September 1978 and a dye-diffusion process relating thereto is exemplified in Research Disclosure (No. 22711) of March 1983.

Processing may proceed in a tray developing unit as is contained, e.g., in an ordinary silver complex diffusion transfer (DTR) apparatus in which contacting with a separate dye image-receiving material is effected after a sufficient absorption of processing liquid by the photographic material has taken place. A suitable apparatus for said purpose is the COPYPROOF CP 38 DTR-developing apparatus. COPYPROOF is a registered trade mark of Agfa-Gavaert N.V., Mortsel, Belgium.

According to an embodiment wherein the image-receiving layer is integral with the photosensitive layer(s), the processing liquid is applied from a rupturable container or by spraying.

A rupturable container that may be employed is e.g. of the type disclosed in US—A—2,543,181 of Edwin H. Land, issued February 27, 1951, 2,643,886 of Ulrich L. di Ghilini, issued June 30, 1953, 2,653,732 of Edwin H. Land, issued September 29, 1953, 2,723,051 of William J. McCune Jr., issued November 8, 1955, 3,056,492 and 3,056,491, both of John E. Campbell, issued October 2, 1962, and 3,152,515 of Edwin H. Land, issued October 13, 1964. In general, such containers comprise a rectangular sheet of fluid- and air-impervious material folded longitudinally upon itself to form two walls that are sealed to one another along their longitudinal and end margins to form a cavity in which processing solution is contained.

The following example further illustrates the present invention. All percentages and ratios are by weight, unless otherwise mentioned.

Example 1

1) Preparation of coating composition A containing magenta dye providing compound 5 of Table 1:

| | |
|---|---|
| silver chloride emulsion having a AgCl content equivalent to 136 g of silver nitrage per kg and a gelatin/silver nitrate ratio of 0.82 | 62 g |
| aqueous 20% gelatin solution | 83 g |
| dispersion of said magenta dye providing compound (prepared as described hereinafter) | 110 g |
| dispersion of EDP-1 | 72 g |
| demineralized water to make | 1 kg |

The above coating composition A was applied at a coverage of 60 g per sq.m to a transparent subed polyethylene terephthalate support whereby the magenta IHR-compound 5 was present at 0.317 g per sq.m corresponding with 0.360 mmol per sq.m.

Preparation of the dispersion of magenta dye providing compound 5 (preparation analogous to procedures described in EP—A—38092).

50 g of said compound 5 were dissolved in ethyl acetate and with the aid of 25 ml of MARLON A-396 (MARLON is a registered trade mark of Chemische Werke Hüls AG, Marl, Westfalen, W. Germany) as a dispersing agent dispersed with high-speed stirring in water.

Said wetting agent has the following formula:

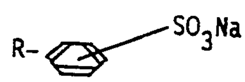

After the pre-dispersion was obtained, the ethyl acetate was removed by evaporation under reduced pressure and 75 g of gelatin as well as a sufficient amount of water were added so as to make 1 kg of dispersion.

Preparation of the dispersion of EDP-1

200 g of EDP-1 were dissolved in ethyl acetate and dispersed in 3 l of water in the presence of 300 g of gelatin and 100 ml of MARLON A-396 (registered trade mark). Thereupon the ethyl acetate was removed by evaporation under reduced pressure and water was added up to a total amount of 4 kg of composition.

Structural formula of EDP-1:

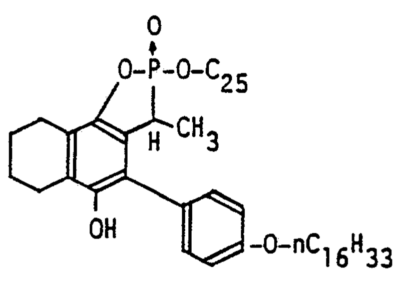

(prepared according to published EP—A—0 124 915)

2) Preparation of the coating composition B containing a silver halide developing agent:

| | |
|---|---|
| 20% aqueous gelatin solution | 400 g |
| dispersion of 1-phenyl-4-methyl-3-pyrazolidinone | 8 g |
| 10% aqueous citric acid solution | 100 g |
| wetting agent | 16 g |

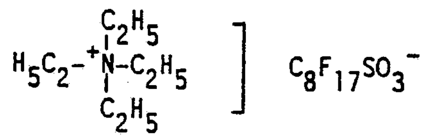

| | |
|---|---|
| mineralized water to make | 1 kg |

The above coating composition B was applied at 75 g per sq.m to the dried coating A.

Preparation of the dispersion of 1-phenyl-4-methyl-pyrazolidinone.

In aqueous medium 200 g of 1-phenyl-4-methyl-3-pyrazolidinone was sand-milled, whereupon 100 g of gelatin and a sufficient amount of water were added so as to make 1 kg of dispersion.

3) Processing

The dried photographic material was exposed through a step-wedge having a constant 0.15. The exposed strip was processed in contact for 1 min with the receptor sheet described above in the COPYPROOF CP 38 (registered trade mark) diffusion transfer processing apparatus containing in its tray an aqueous solution comprising per litre:

| | |
|---|---|
| sodium hydroxide | 24 g |
| trisodium phosphate | 25 g |
| sodium bromide | 2 g |
| sodium thiosulphate | 2 g |
| cyclohexane dimethanol | 25 g |
| methyl-propyl-propane diol | 25 g |
| potassium iodide | 2 g |
| distilled water to make | 1 litre |

4) Measurements

The colour density measurements proceeded in reflex with a MACBETH (trade name) Densitometer RD 919.

5) Results

Maximum density = 1.83

$\lambda_{max}$ = 556 nm

B 1/2 = 101 nm.

**Claims**

1. A process for the production of diffusion transfer images, wherein said process comprises the steps of:

(1) applying an alkaline aqueous processing composition to an imagewise exposed photographic material that contains in operative association with at least one alkali-permeable silver halide hydrophilic colloid emulsion layer a dye releasing compound that can split off a diffusible magenta azo-dye.

(2) providing a silver halide developing agent in said photographic material for being present therein during application of said alkaline liquid to effect imagewise release of said dye as a function of development of said silver halide emulsion layer and a redox-reaction not being an oxidative chromogenic coupling reaction or as a function of said development and an argentolytic reaction, and

(3) allowing diffusion of said dye into an image-receiving layer which is in water-permeable relationship with said emulsion layer, characterized in that the said dye releasing compound corresponds to the following general formula:

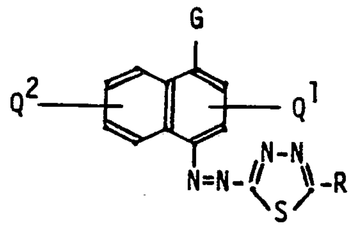

wherein:

G is hydroxyl or salt or alkali labile precursor thereof, or $H_2N$— or $R^1SO_2NH$—, of which $R^1$ is an alkyl group including a substituted alkyl group or an aryl group including a substituted aryl group;

$Q^1$ being in position 2 or 3 relative to G is hydrogen, halogen, —$SO_2NR^2R^3$, —$SO_2R^4$, —$SO_3H$, —$CONR^2R^3$ or —$COOR^4$, or which $R^2$ and $R^3$ (same or different) is hydrogen, an alkyl group including a substituted alkyl group, an aryl group including a substituted aryl group, a cycloalkyl group, a heterocyclic ring substituent including a substituted heterocyclic ring substituent, or $R^2$ and $R^3$ represent together the necessary atoms to complete a heterocyclic ring; and $R^4$ is hydrogen, an alkyl group including a substituted alkyl group, an aryl group including a substituted aryl group, a cycloalkyl group or a heterocyclic ring substituent including a substituted heterocyclic ring substituent;

$Q^2$ being in position 5, 6, 7 or 8 relative to G is hydrogen, halogen, $R^4O$—, HO— or salt or alkali labile precursor thereof, —$NR^2R^3$, —$SO_2R^4$, —$SO_3H$, —$COOR^4$, —$SO_2NR^2R^3$, —$CONR^2R^3$, —$NR^4SO_2R^5$, or —$NR^4COR^5$, of which $R^5$ is $R^4$ or —$NR^2R^3$ or —$OR^4$ wherein $R^2$, $R^3$ and $R^4$ have the same meaning as defined above, and

R is hydrogen, an alkyl group including a substituted alkyl group, an aryl group including a substituted aryl group, a cycloalkyl group, —$OR^4$, —$SR^4$, —$NR^2R^3$, —$NR^4SO_2R^5$ or —$NR^4COR^5$ wherein $R^2$, $R^3$, $R^4$ and $R^5$ have the same meaning as defined above, and wherein at least one of the groups R, $Q^1$ or $Q^2$ is of the type

$$CAR—G^1—$$

wherein:

CAR is a moiety, being or carrying a ballasting group, making said compound non-diffusible in a hydrophilic colloid medium under wet alkaline conditions,

$G^1$ represents a chemical group that is cleaved or released from the carrier moiety as a result of the said redox reaction or as the result of the said argentolytic reaction.

2. Process according to claim 1, characterized in that $G^1$ represents a linking group of the type:

$$—(A_1)_q—(B)_r—(A_2)_s—$$

wherein:

each of q, r and s is 1 or zero with the proviso that not more than two thereof is zero;

each of $A_1$ and $A_2$ (same or different) is a single bond —O— or —S— or a bivalent atom group which is —$SO_2$—, —CO—, —$CONR^4$, —$SO_2NR^4$—, —$NR^4CO$—, —$NR^4SO_2$—, —$NR^4COO$-phenylene or —$NR^4$, wherein $R^4$ has the same meaning as in claim 1, and

B is a single bond, an alkylene group including a substituted alkylene group or an arylene group including a substituted arylene group.

3. A process according to claim 1 or 2, characterized in that said CAR moiety is a hydroquinone or quinone type moiety.

4. Process according to claim 1 or 2, characterized in that said CAR—$G^1$— group is a member of the following groups including these groups in further substituted form:

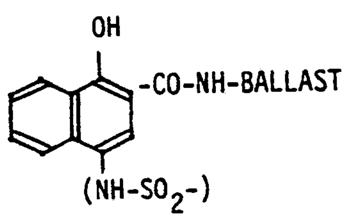

,

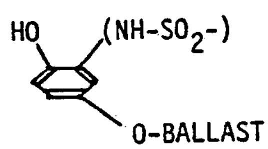

,

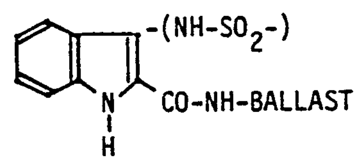

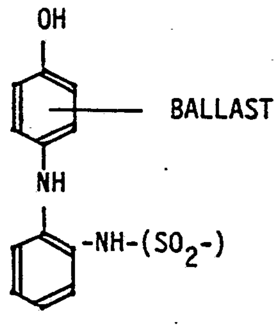

,

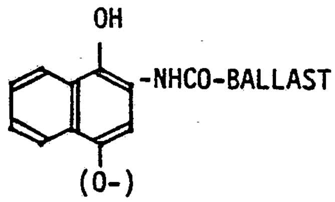

5. Process according to claim 1 or 2, characterized in that said CAR—G[1]— group is a member of the following groups including these groups in further substituted form:

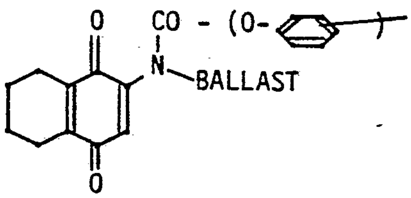

,

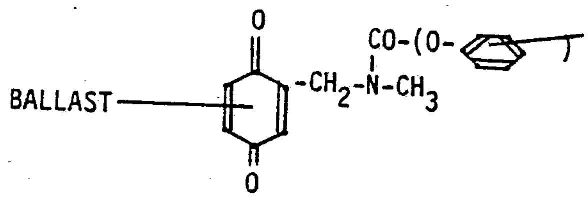

,

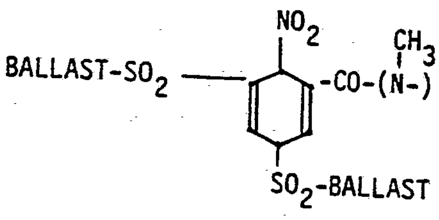

,

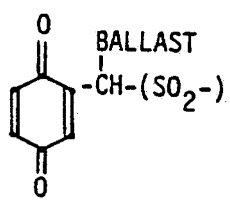

,

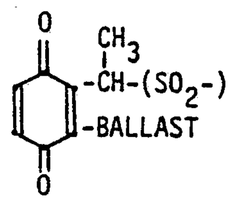

,

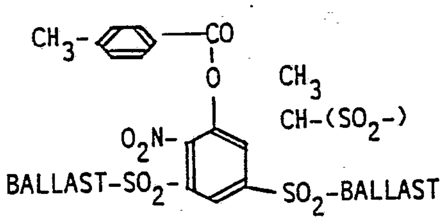

,

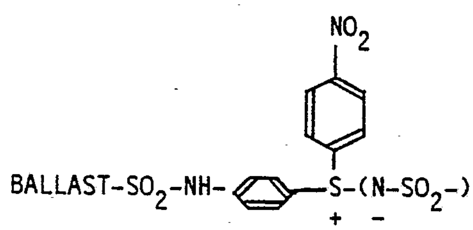

,

6. Process according to any of claims 1 to 3, characterized in that said compound is a reducible quinonoid IHR-compound that after reduction can undergo a dye release with an intermolecular displacement reaction.

7. Process according to any of claims 1 to 3, characterized in that said compound is a reducible quinonoid IHR-compound being a compound undergoing an increase of hydrolysis by reduction and that can undergo a dye release by an elimination reaction.

**Patentansprüche**

1. Verfahren zur Herstellung von Diffusionsübertragungsbildern, das die folgenden Stufen umfaßt:

(1) Auftragen einer alkalischen wäßrigen Verarbeitungszusammensetzung auf ein bildmäßig belichtetes photographisches Material, daß in wirksamer Beziehung mit mindestens einer alkalidurchlässigen Emulsionsschich von Silberhalogenid und hydrophilem Kolloid eine farbstofffreisetzende Verbindung enthält, welche einen diffundierbaren Purpur-Azofarbstoff abzuspalten vermag,

(2) Versehen einer Silberhalogenid-Entwicklersubstanz im photographischen Material, damit sie während des Auftrags der alkalischen Flüssigkeit darin enthalten ist, um eine bildmäßige Freisetzung dieses Farbstoffs in Abhängigkeit von der Entwicklung der Silberhalogenidemulsionsschicht und einer Redoxreaktion, die keine oxidative farbstoffbildende Kupplungsreaktion ist, oder in Abhängigkeit von dieser Entwicklung und einer argentolytischen Reaktion zu bewirken, und

(3) diesen Farbstoff in eine Bildempfangsschicht überdiffundieren lassen, die mit dieser Emulsionsschicht in wasserdurchlässiger Beziehung steht, dadurch gekennzeichnet, daß die farbstofffreisetzende Verbindung der folgenden allgemeinen Formel entspricht:

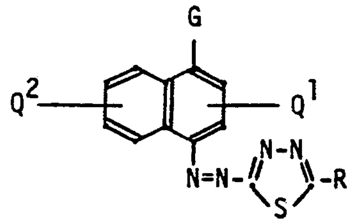

in der bedeuten:

G Hydroxyl oder Salz oder alkalilabilen Vorläufer davon, oder $H_2N$— oder $R^1SO_2NH$—, in der $R^1$ eine Alkylgruppe einschließlich einer substituierten Alkylgruppe, oder eine Arylgruppe einschließlich einer substituierten Arylgruppe ist;

$Q^1$ in 2- oder 3-Stellung gegenüber G, Wasserstoff, Halogen, —$SO_2NR^2R^3$, —$SO_2R^4$, —$SO_3H$, —$CONR^2R^3$ oder —$COOR^4$, in denen $R^2$ und $R^3$ (gleich oder verschieden) Wasserstoff, eine Alkylgruppe einschließlich einer substituierten Alkylgruppe, eine Arylgruppe einschließlich einer substituierten Arylgruppe, eine Cycloalkylgruppe, oder ein Substituent eines heterocyclischen Ringes einschließlich eines Substituenten eines substituierten heterocyclischen Ringes ist, oder $R^2$ und $R^3$ zusammen die zum Schließen eines heterocyclischen Ringes notwendigen Atome bedeuten, und $R^4$ Wasserstoff, eine Alkylgruppe einschließlich einer substituierten Alkylgruppe, eine Arylgruppe einschließlich einer substituierten Arylgruppe, eine Cycloalkylgruppe, oder einen Substituenten eines heterocyclischen Ringes einschließlich eines Substituenten eines substituierten heterocyclischen Ringes bedeutet,

$Q^2$ in 5-, 6- oder 7-Stellung gegenüber G, Wasserstoff, Halogen, $R^4O$—, HO— oder Salz oder einen alkalilabilen Vorläufer davon, —$NR^2R^3$, —$SO_2R^4$, —$SO_3H$, —$COOR^4$, —$SO_2NR^{23}$, —$CONR^2R^3$, —$NR^4SO_2R^5$, oder —$NR^4COR^5$, von denen $R^5$ $R^4$, —$NR^2R^3$ oder —$OR^4$ ist, in denen $R^2$, $R^3$ und $R^4$ dieselbe, wie oben definierte Bedeutung haben, und

R Wasserstoff, eine Alkylgruppe einschließlich einer substituierten Alkylgruppe, eine Arylgruppe einschließlich einer substituierten Arylgruppe, eine Cycloalkylgruppe, —$OR^4$, —$SR^4$, —$NR^2R^4$, —$NR^4SO_2R^5$ oder —$NR^4COR^5$, in denen $R^2$, $R^3$, $R^4$ und $R^5$ dieselbe, wie oben definierte Bedeutung haben, und in denen mindestens eine der Gruppen R, $Q^1$ oder $Q^2$ des Typs

$$CAR—G^1—$$

ist, in dem bedeuten:

CAR eine Fraktion, welche eine Ballastgruppe ist oder trägt, die die Verbindung in einem hydrophilen Kolloidmedium unter nassen alkalischen Umständen diffusionsfest macht, und

$G^1$ eine chemische Gruppe, die zufolge dieser Redoxreaktion oder dieser argentolytischen Reaktion von der Trägerfraktion abgespaltet oder daraus freigesetzt wird.

2. Verfahren nach Anspruch 1, dadurch gekennzeichnet, daß $G^1$ eine Bindungsgruppe des Typs:

$$—(A_1)_q—(B)_r—(A_2)_s—$$

darstellt, in der bedeuten:

q, r und s je 1 oder Null, unter der Bedingung, daß nicht mehr als zwei davon Null sind;

$A_1$ und $A_2$ (gleich oder verschieden) je eine einfache Bindung, —O— oder —S— oder eine der zweiwertigen Atomgruppen —$SO_2$—, —CO—, —$CONR^4$—, —$SO_2NR^4$—, —$NR^4CO$—, —$NR^4SO_2$—, —$NR^4COO$-Phenylen- oder —$NR^4$— ist, in denen $R^4$ dieselbe Bedeutung hat wie beschrieben in Anspruch 1, und

B eine einfache Bindung, eine Alkylengruppe einschließlich einer substituierten Alkylengruppe, eine Arylengruppe einschließlich einer substituierten Arylengruppe.

3. Verfahren nach Anspruch 1 oder 2, dadurch gekennzeichnet, daß die CAR-Fraktion eine Fraktion des Hydrochinon- oder des Chinon-Typs ist.

4. Verfahren nach Anspruch 1 oder 2, dadurch gekennzeichnet, daß die CAR—$G^1$-Gruppe eine der folgenden, gegebenenfalls weiter substituierten Gruppen ist:

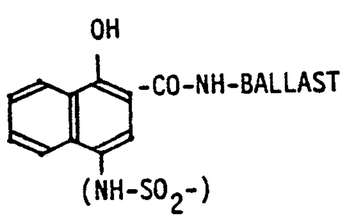
,
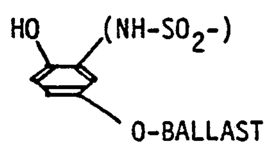
,
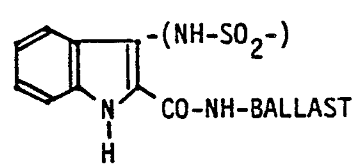

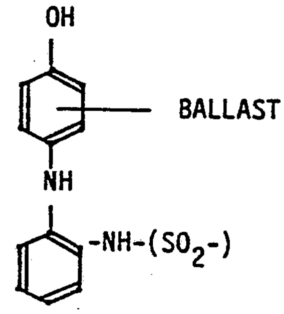 , 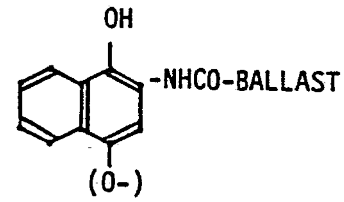

5. Verfahren nach Anspruch 1 oder 2, dadurch gekennzeichnet, daß die CAR—G[1]-Gruppe eine der folgenden, gegebenenfalls weiter substituierten Gruppe ist:

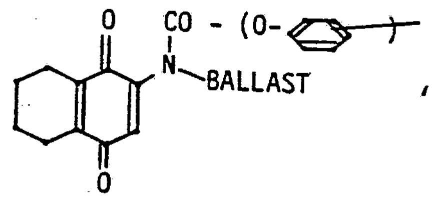 , 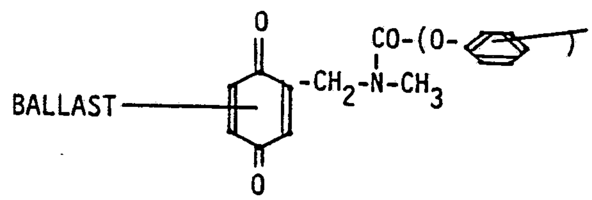 ,

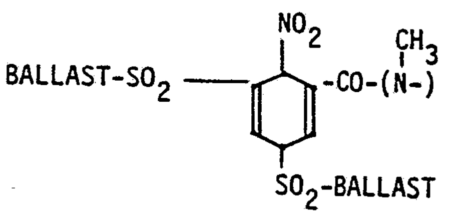 , 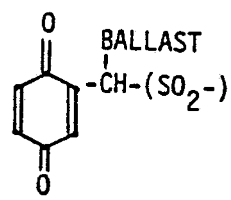 , 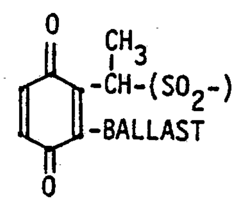 ,

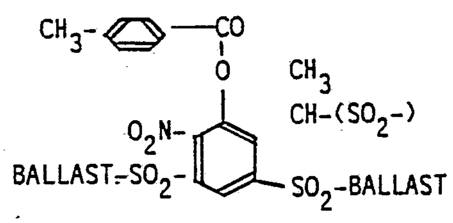 , 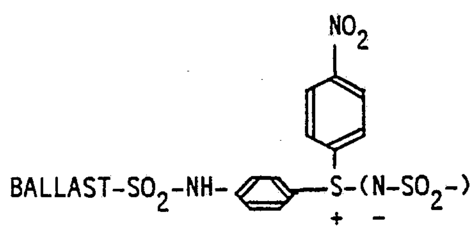

6. Verfahren nach irgendeinem der Ansprüche 1—3, dadurch gekennzeichnet, daß die Verbindung eine reduzierbare IHR-Verbindung des Chinonoid-Typs ist, die nach der Reduktion mit einer intermolekularen Verdrängungsreaktion eine Farbstofffreisetzung eingehen kann.

7. Verfahren nach irgendeinem der Ansprüche 1—3, dadurch gekennzeichnet, daß die Verbindung eine reduzierbare IHR-Verbindung des Chinonoid-Typs ist, die durch Reduktion eine Steigerung der Hydrolyse und durch eine Abspaltungsreaktion eine Farbstofffreisetzung eingehen kann.

**Revendications**

1. Procédé de formation d'images de transfert par diffusion, ce procédé comprenant les étapes consistant à:

(1) appliquer une composition alcaline aqueuse de traitement à un matériau photographique exposé sous forme d'une image et contenant, en association opérante avec au moins une couche d'émulsion colloïdale hydrophile à l'halogénure d'argent perméable aux alcalis, un composé libérant un colorant pouvant séparer un colorant azoïque magenta diffusible,

(2) prévoir un agent développateur d'halogénure d'argent dans ce matériau photographique de telle sorte qu'il y soit présent au cours de l'application de ce liquide alcalin pour assurer la libération de ce colorant sous forme d'une image en fonction du développement de cette couche d'émulsion à l'halogénure

d'argent, de même qu'une réaction redox qui n'est pas une réaction de copulation chromogène par oxydation, ou en fonction du développement précité et d'une réaction argentolytique, et

(3) laisser se diffuser le colorant dans une couche réceptrice d'image qui est en relation de perméabilité à l'eau avec cette couche d'émultion, caractérisé en ce que ce composé libérant un colorant répond à la formule générale suivante:

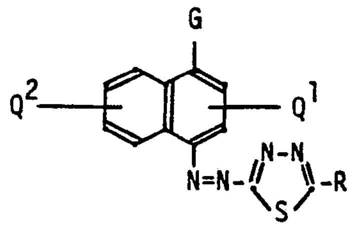

dans laquelle

G représente un groupe hydroxyle, un sel ou un précurseur de ce sel labile aux alcalis, ou $H_2N$— ou $R^1SO_2NH$—, où $R^1$ représente un groupe alkyle, y compris un groupe alkyle substitué, ou un groupe aryle, y compris un groupe aryle substitué;

$Q^1$, qui occupe la position 2 ou 3 par rapport à G, représente un atome d'hydroghène, un atome d'halogène, —$SO_2NR^2R^3$, —$SO_2R^4$, —$SO_3H$, —$CONR^2R^3$ ou —$COOR^4$ où $R^2$ et $R^3$ (identiques ou différents) représentent chacun un atome d'hydrogène, un groupe alkyle, y compris un groupe alkyle substitué, un groupe aryle, y compris un groupe aryle substitué, un groupe cycloalkyle, un substituant à noyau hétérocyclique, y compris un substituant à noyau hétérocyclique substitué, ou $R^2$ et $R^3$ ensemble représentent les atomes nécessaires pour compléter un noyau hétérocyclique; et $R^4$ représente un atome d'hydrogène, un groupe alkyle, y compris un groupe alkyle substitué, un groupe aryle, y compris un groupe aryle substitué, un groupe cycloalkyle ou un substituant à noyau hétérocyclique, y compris un substituant à noyau hétérocyclique substitué;

$Q^2$, qui occupe la position 5, 6, 7 ou 8 par rapport à G représente un atome d'hydrogène, un atome d'halogène, $R^4O$—, HO—, un sel ou un précurseur de ce sel labile aux alcalis, —$NR^2R^3$, —$SO_2R^4$, —$SO_3H$, —$COOR^4$, —$SO_2NR^2R^3$, —$CONR^2R^3$, —$NR^4SO_2R^5$ ou —$NR^4COR^5$ où $R^5$ représente $R^4$ ou —$NR^2R^3$ ou —$OR^4$, où $R^2$, $R^3$ et $R^4$ ont les mêmes significations que celles définies ci-dessus, et

R représente un atome d'hydrogène, un groupe alkyle, y compris un groupe alkyle substitué, un groupe aryle, y compris un groupe aryle substitué, un groupe cycloalkyle, —$OR^1$, —$SR^4$, —$NR^2R^3$, —$NR^4SO_2R^5$ ou —$NR^4COR^5$, où $R^2$, $R^3$, $R^4$ et $R^5$ ont les mêmes significations que celles définies ci-dessus, et où au moins un des groupes R, $Q^1$ ou $Q^2$ est du type

$$CAR—G^1—$$

où

CAR représente une fraction qui est ou qui comporte un groupe de ballastage rendant ce composé non diffusible dans un milieu colloïdal hydrophile dans des conditions alcalines humides,

$G^1$ représente un groupe chimique qui est clivé ou libéré de la fraction de support suite à cette réaction redox ou suite à cette réaction argentolytique.

2. Procédé selon la revendication 1, caractérisé en ce que $G^1$ représente un groupe de liaison de type:

$$—(A_1)_q—(B)_r—(A_2)_s—$$

où

q, r et s représentent chacun 1 ou 0, avec cette réserve qu'au maximum deux de ces symboles représentent 0;

$A_1$ et $A_2$ (identiques ou différents) représentent chacun une liaison simple, —O— ou —S— ou un groupe d'atomes bivalent —$SO_2$—, —CO—, —$CONR^4$—, —$SO_2NR^4$—, —$NR^4CO$—, —$NR^4SO_2$—, —$NR^4COO$-phénylène ou —$NR^4$—, où $R^4$ a la même signification que celle définie dans la revendication 1, et

B représente une liaison simple, un groupe alkylène,

y compris un groupe alkylène substitué ou un groupe arylène, y compris un groupe arylène substitué.

3. Procédé selon la revendication 1 ou 2, caractérisé en ce que la fraction CAR représente une fraction de type hydroquinone ou quinone.

4. Procédé selon la revendication 1 ou 2, caractérisé en ce que le groupe CAR—$G^1$— est un des groupes suivantes, y compris ces mêmes groupes sous forme substituee davantage:

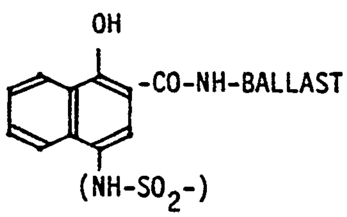 , 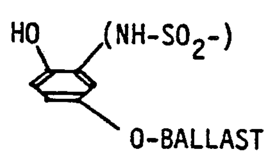 , 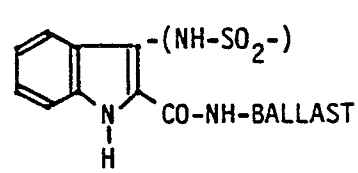

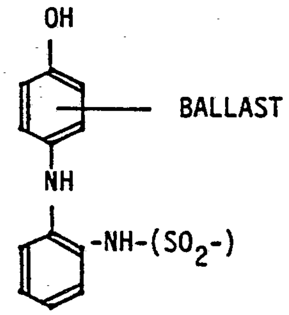

,

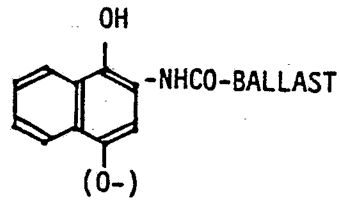

5. Procédé selon la revendication 1 ou 2, caractérisé en ce que ce groupe CAR—G¹— est un des groupes suivants, y compris ces mêmes groupes sous forme substituée davantage:

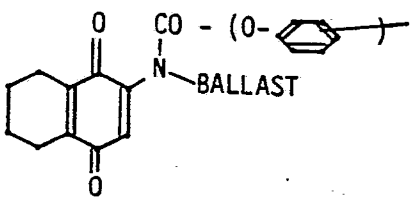

,

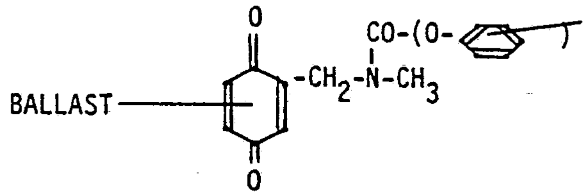

,

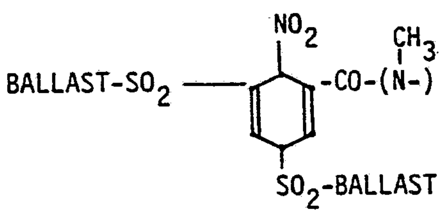

,

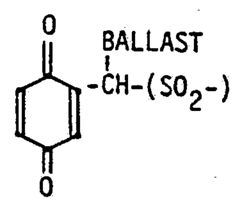

,

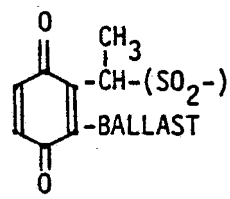

,

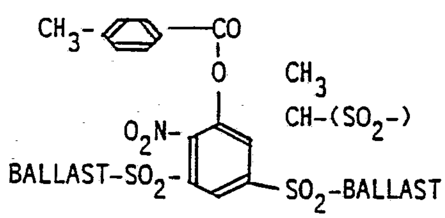

,

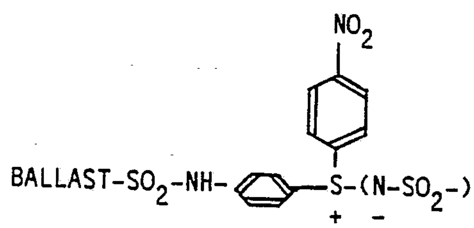

6. Procédé selon l'une quelconque des revendications 1 à 3, caractérisé en ce que ce composé est un composé IHR quinonoïde réductible qui, après réduction, peut subir une libération d'un colorant avec une réaction de déplacement intermoléculaire.

7. Procédé selon l'une quelconque des revendications 1 à 3, caractérisé en ce que ce composé est un composé IHR quinonoïde réductible qui est un composé subissant un accroissement d'hydrolyse par réduction et qui peut subir une libération d'un colorant par une réaction d'élimination.